# EUROPÄISCHE PATENTSCHRIFT

(11) **EP 1 710 536 B1**
(45) Veröffentlichungstag und Bekanntmachung des Hinweises auf die Patenterteilung: **28.01.2009**
(21) Anmeldenummer: 06006354.2
(22) Anmeldetag: 28.03.2006
(51) Int. Cl.: G01B 11/24, A61B 5/00, A61C 19/04

(54) **Verfahren zur dreidimensionalen Formerfassung eines Körpers**
Method for determining the shape of a body in three dimensions
Procédé de saisie tridimensionnelle de la forme d'un objet

(30) Priorität: 08.04.2005 DE 102005016525
(43) Veröffentlichungstag der Anmeldung: 11.10.2006
(73) Patentinhaber: DeguDent GmbH, 63403 Hanau-Wolfgang (DE)
(72) Erfinder: Büchler, Erik, Dr., 60314 Frankfurt am Main (DE); Brinkmann, Hartmut, 49163 Bohmte (DE); Garthaus, André, 49134 Wallenhorst (DE); von Schroeter, Philip, Dr., 63517 Rodenbach (DE)
(74) Vertreter: Stoffregen, Hans-Herbert

(56) Entgegenhaltungen:
- US-A- 4 596 919
- US-A- 5 231 470
- US-B1- 6 287 121
- US-B1- 6 847 462

## Beschreibung

Die Erfindung bezieht sich auf ein Verfahren zur dreidimensionalen Formerfassung eines Körpers oder eines Teils von diesem, insbesondere eines zahntechnischen Objekts wie Modells, durch scannende berührungslose Abstandsmessung unter Verwendung einer eine Ausgangsstrahlung emittierende Strahlenquelle umfassenden optischen Sensoreinrichtung, wobei unter verschiedenen Winkeln die Form des Körpers wiedergebende Bereiche mit als Auftreffstrahlung bezeichneter Strahlung beaufschlagt und als Messstrahlung bezeichneter reflektierterstrahlung gemessen werden, wobei der Körper relativ zu der optischen Sensoreinrichtung verstellt wird.

Ein entsprechendes Verfahren ist der DE-A-43 01 538 zu entnehmen. Mit diesem werden insbesondere Gebissmodelle gemessen. Hierzu sind zumindest zwei Lichtschnittsensoren vorgesehen, die das Gebiss unter verschiedenen Winkeln nach dem Triangulationsprinzip messen. Die entsprechenden Messergebnisse werden sodann digitalisiert, um auf deren Basis einen Zahnersatz im CAD/CAM-Verfahren herzustellen.

Der DE-A-101 33 568 ist ebenfalls ein Verfahren zur dreidimensionalen Messung zum Digitalisieren eines Körpers insbesondere eines zahntechnischen Objekts zu entnehmen. Hierzu wird der Körper in einer Halterung in einer definierten Orientierung eingespannt, der Körper bestrahlt und reflektierte Strahlung ausgewertet, wobei der Körper zum Messen sowohl translatorisch als auch rotatorisch zu einer Strahlenquelle bewegt wird. Bei dieser handelt es sieh insbesondere um einen Streifenlichtscanner.

Aus der DE-A-42 14 876 ist ein Verfahren zur optischen Vermessung von Zähnen bekannt, bei dem Zahnkoordinaten mit Hilfe von Korrekturwerten korrigiert werden. Dabei wird die Oberflächenormale eines Messpunktes berücksichtigt.

Zur optischen Untersuchung von Prüflingen fällt nach der DE-A-40 13 309 ein Laserstrahl auf eine Prüflingsoberfläche, um sodann die parallel zur Oberflächennormalen reflektierte Strahlung von einer CCD-Kamera zu erfassen.

Der DE-T-696 28 956 ist eine eine Laserlichtquelle aufweisende Vorrichtung zum Abtasten eines Objektes zu entnehmen. Die Abtasteinrichtung ist zur Bewegung durch einen Bediener auf einem mehrgelenkigen Arm befestigt.

Der US-A-5,231,470 ist die Lehre zu entnehmen, mittels scannender berührungsloser Abstandsmessung die Form eines dreidimensionalen Körpers zu erfassen. Hierzu wird das Triangulationsverfahren benutzt. Berücksichtigt wird zur Messung des Körpers reflektierte Strahlung, die zum Auftreffstrahl einen Winkel einschließt, der als zu dem Messpunkt verlaufenden Normalen einen Grenzwinkel nicht überschreitet. Die reflektierte Strahlung wird sodann mittels eines Spiegels auf Fotodiodensensoren umgelenkt. Zur Durchführung der Messung ist es erforderlich, dass die auf das Objekt auftreffende Strahlung, die reflektierte Strahlung und die umgelenkte Strahlung ein Dreieck bilden.

Um den Körper vollständig zu erfassen, ist es erforderlich, dass der Körper gedreht und/oder die die Strahlung emittierende Strahlenquelle translatorisch bewegt wird.

Der vorliegenden Erfindung liegt die Aufgabe zu Grunde, ein Verfahren der eingangs genannten Art so weiterzubilden, dass auf einfachem Wege eine Formerfassung eines Körpers, insbesondere Hinterschneidungen dieses erfolgen kann, wobei der Aufwand der Bewegung des Körpers zu der Strahlenquelle gering gehalten werden soll. Gleichzeitig soll eine präzise Messung ermöglicht werden.

Zur Lösung der Aufgabe sieht die Erfindung vor, dass die Ausgangsstrahlung mittels zumindest eines Umlenkelementes derart umgelenkt wird, dass die Auftreffstrahlung den Körper unter verschiedenen Winkeln zur Ausgangsstrahlung beaufschlagt, dass in eine Gegenrichtung der Auftreffstrahlung reflektierte Strahlung zur Abstandsbestimmung mit der optischen Sensoreinrichtung gemessen wird und dass zur Formerfassung des jeweiligen gemessenen Bereichs die von diesem reflektierte als Messstrahlung bezeichnete Strahlung berücksichtigt wird, die zu einer Oberflächennormalen, die dem jeweiligen Bereich entspricht oder zugeordnet wird, und die aus aus der Messstrahlung gewonnenen ungefilterten Messdaten des Bereichs ermittelt wird, einen Winkel α einschließt, der zu der Oberflächennormalen gleich einem oder kleiner als ein vorgegebener Grenzwinkel α_{GR} ist, wobei reflektierte Strahlung zur Formerfassung unberücksichtigt bleibt, deren Winkel zu der Oberflächennormalen größer als der vorgegebene Grenzwinkel α_{GR} ist.

Zur Bestimmung der Oberflächennormalen ist dabei vorgesehen, dass aus aus der reflektierten Strahlung gewonnenen Messdaten des Bereichs dessen Normale bzw. eine mittlere Normale berechnet wird, um sodann zur Berechnung der Form des Bereichs, also dessen Oberflächenverlaufs nur diejenigen Messdaten zu berücksichtigen, denen Messstrahlung mit einem Reflexionswinkel zugeordnet ist, die zu der zuvor berechneten (mittleren) Oberflächennormalen einen Winkel einschließt, der kleiner oder gleich dem vorgegebenen Grenzwinkel α_{GR} ist. Der Grenzwinkel α_{GR} liegt vorzugsweise im Bereich zwischen 10° und 20°.

Ursächlich für die Festlegung von α_{GR} ist u. a., dass durch die Umlenkung des emittierten Strahls bedingt eine Verzerrung erfolgt, d. h. z. B. ein Ausgangsstrahl mit einem punkt- bzw. kreisförmigen Querschnitt wird z. B. als Ellipse oder Strich auf der Oberfläche im zu messenden Punkt abgebildet. Dies führt zu Messverfälschungen. Um nur Messwerte zur Berechnung der Form zuzulassen, die eine geringe Verzerrung aufweisen, wird α_{GR} festgelegt.

Mit anderen Worten wird aus einer Messdaten- oder -punktewolke, die einen zu messenden Bereich repräsentiert, zunächst die Normale bestimmt, um sodann die zu verwertenden Messdaten auszufiltern, so dass infolgedessen nur diejenigen berücksichtigt werden, die zu einer den gestellten Genauigkeitsanforderungen genügenden Formermittlung des Bereichs führen.

Dabei entspricht jeder Messpunkt einer Raumkoordinaten, wobei die z-Koordinate mittels der vorzugsweise als Abstandssensor ausgebildeten optischen Sensoreinrichtung bestimmt wird, wohingegen die x- und y-Koordinate durch die Position des Objektes vorgegeben wird. Um insoweit aufgrund der dreidimensionalen Geometrie des zu messenden Körpers Verzerrungen bezüglich der x-, y-Koordinate auszuschließen, erfolgt zuvor eine Koordinatentransformation unter Zugrundelegung eines normierten Prüfkörpers, bei dem es sich vorzugsweise um eine Kugel oder einen eine bekannte Geometrie aufweisenden Raumkörper handelt.

Um verschiedene Einfallswinkel einzustellen, ist vorgesehen, dass die von der optischen Sensoreinrichtung emittierte Strahlung über zumindest ein Umlenkelement wie einen Spiegel oder über ein Prisma umgelenkt wird. Insbesondere ist vorgesehen, dass in den Strahlweg eine um eine Achse drehbare Spiegelanordnung anordbar ist, um so gewünschte Winkel sowohl senkrecht zur x-/y-Ebene, innerhalb der der Körper verstellbar ist, als auch unter einen von 90° abweichenden Winkel zu der Ebene einstellen zu können. Andere Umlenkmittel wie Prismen sind gleichfalls möglich.

Mit diesen Maßnahmen kann eine Teilformerfassung aus verschiedenen Ansichten des Körpers über das jeweils genutzte Umlenkmittel wie Spiegel oder Prisma erfolgen. Gleichzeitig wird der Körper in der x-/y-Ebene verstellt, um sodann für jede gewünschte x-/y-Position mittels des von dem Körper reflektierten Messstrahls die z-Position des Körpers zu bestimmen. Hierdurch ergibt sich sodann die Raumkoordinate des Messpunktes. Entsprechend werden die x-, y- und z-Werte für jeden Oberflächenmesspunkt ermittelt.

Durch die Verwendung der Umlenkmittel ist die Möglichkeit gegeben, Unterschnitte bzw. Hinterschneidungen optisch zu erfassen, ohne dass der Körper gekippt werden muss. Somit kann eine Formerfassung mit mechanisch einfachen Maßnahmen erfolgen.

Durch die Umlenkung der Strahlung erfolgt die Teilformerfassung optisch verzerrt. Um insoweit eine Korrektur, d. h. Entzerrung der Einzelansichten zu erreichen, wird zuvor ein Referenzobjekt gemessen, d. h. gescannt, wobei für die jeweilige Position des Umlenkelements wie Spiegels ein Vergleich mit den geometrischen Daten des Referenzobjekts erfolgt und hierdurch eine Transformation ermöglicht wird, die sicherstellt, dass die Messwerte in den tatsächlichen Raumkoordinaten des festgelegten Raumkoordinatensystems ermittelt werden. Die Einzelansichten werden sodann zu einem Gesamtbild und somit zu der dreidimensionalen Form des zu messenden Körpers zusammengesetzt.

In hervorzuhebender Weiterbildung der Erfindung ist vorgesehen, dass das Objekt vor dem scannenden Messen zu einer Schablone ausgerichtet wird, die eine Fläche aufspannt, die quer, vorzugsweise senkrecht zu der Ebene verläuft, die von der von der optischen Sensoreinrichtung emittierten und von dem jeweiligen Reflexionselement umgelenkten Strahlung aufgespannt ist. Insbesondere sollte die Schablone derart ausgerichtet sein, dass die Fläche parallel zu der von der Sensoreinrichtung emittierten Strahlung verläuft, bevor diese umgelenkt ist. Die Ausrichtung des Körpers in z-Richtung erfolgt zu der Schablone derart, dass der Körper die Fläche in zumindest einem Punkt, vorzugsweise in zumindest zwei zueinander beabstandeten Bereichen berührt.

Durch diese Maßnahme wird sichergestellt, dass der zu messende Körper in Bezug auf die z-Achse, die über den Messstrahl und optische Sensoreinrichtung gemessen wird, optimal ausgerichtet ist. Zuvor wird der Körper wie ein negatives oder positives zahntechnisches Modell auf einen Modellhalter befestigt, der seinerseits von einem in x- und y-Richtung des Koordinatensystems verstellbaren Messtisch ausgeht.

Nach einer eigenerfinderischen Weiterbildung wird vorgeschlagen, dass von dem zu messenden Körper vor dem eigentlichen scannenden Messen ein Übersichtsbild angefertigt wird, um sodann Scanbereiche festzulegen, die nach einer gewünschten Scanstrategie gemessen werden. Ein entsprechendes insbesondere zweidimensionales Übersichtsbild kann mit einem gesonderten optischen Sensor - gegebenenfalls jedoch auch mit der optischen Sensoreinrichtung - aufgenommen werden, wobei das Bild auf einem Monitor darstellbar ist. In dem Übersichtsbild werden sodann von dem Anwender der bzw. die Scanbereiche mittels eines Eingabegerätes festgelegt. Dies kann z. B. bei MS WORD per Mouse durch Öffnen eines Rechtecks und über "DRAG" und "ZOOM" erfolgen, um den Messbereich festzulegen. Des Weiteren werden die Scanbereiche klassifiziert. Bei zahntechnischen Objekten kann der Restaurationstyp bzw. die geometrische Struktur für jeden Scanbereich entsprechend der Dental-Fachnomenklatur mittels Eingabegerät festgelegt werden. So kann z. B. nach Festlegen eines Rechtecks der Restaurationstyp unter den möglichen Vorgaben wie Käppchen, Inlay, Onlay, Krone, Brückenpfeiler, Brückenglied, Implantat, Gingiva, Nachbarzahn, konfektionierte, teilkonfektionierte oder individualisierte Abutments (Pfosten), etc. ausgewählt werden.

Für jeden Scanbereich wird sodann unter Berücksichtigung des Restaurationstyps bzw. der angegebenen geometrischen Struktur die Scanstrategie festgelegt, die aus in einem Rechner zuvor abgelegten mehreren Scanstrategien automatisch ausgewählt wird. Für jeden Scanbereich werden die x-/y-Verfahrwege des Messtisches berechnet und die Auswahl der Umlenkelemente wie Spiegel festgelegt. Für die jeweilige x-/y-Messwerte erfolgte zuvor eine Kalibrierung durch Scannen eines Kalibrationselementes wie Kalibrationskugel.

Der zum Messen benutzte Auftreff- und damit Messstrahl muss nicht zwingend einen punkt- bzw. kreisförmigen Querschnitt aufweisen. Ein linien- oder flächenförmiger Querschnitt ist gleichfalls möglich. Hierdurch erfolgt eine Messwerteverfälschung nicht, da entsprechend ein gleicher Auftreffstrahl beim Kalibrieren, also beim Scannen des Kalibrationselementes verwendet wurde.

Eine Kalibrierung muss nicht notwendigerweise vor jeder Messung durchgeführt werden. Nach dem Positionieren erfolgt sodann das Messen, also Scannen des jeweils ausgewählten Bereichs des Körpers, wobei entsprechend der erfindungsgemäßen Lehre allein die Messwerte berücksichtigt werden, die aus Messstrahlen ermittelt werden, die in Bezug auf den zu messenden Bereich des Körpers zu der Oberflächennormalen des Bereichs einen vorher festgelegten Grenzwinkel α_{GR} nicht überschreiten.

Mittels der erfindungsgemäßen Lehre werden einzelne Bereiche eines Körpers, dessen Formen erfasst werden sollen, gescant, wobei die x-/y-Koordinate des jeweiligen Messpunktes durch die Position des Messtisches, der zu der optischen Sensoreinrichtung verstellt wird, und die z-Koordinate durch die optische Sensoreinrichtung selbst bestimmt werden. Dabei wird für jeden zu messenden, d. h. zu scannenden Bereich zunächst der Umlenkwinkel der emittierten Strahlung festgelegt und sodann der Körper in die den gewünschten Messpunkten entsprechenden x-/y-Positionen verfahren. Die Messungen werden dabei so durchgeführt, dass Überlappungsbereiche auftreten, d. h. Randbereiche von einzelnen zu messenden Bereichen werden bei verschiedenen Umlenkwinkeln und somit Auftreff- und Reflexionswinkeln gemessen. Messpunkte, denen in diesen Überlappungsbereichen Messstrahlen zugeordnet werden, deren Reflexionswinkel zur jeweiligen Oberflächennormale des jeweiligen gemessenen Bereichs den vorgegebenen bzw. festgelegten Grenzwinkel α_{GR} nicht überschreiten, können sodann dahingehend selektiert werden, dass nur diejenigen weiterverarbeitet werden, die aus Messstrahlen ermittelt wurden, die zu der jeweiligen Bereichsoberflächennormale den kleineren Winkel einschließen.

Nach Messen sämtlicher Bereiche und der sich hieraus rechnerisch ergebenden Gesamtformerfassung werden die entsprechend digitalisierten Daten einer CAD/CAM-Software zur weiteren Verarbeitung zugeführt, um z. B. auf dem zahntechnischen Bereich einen gewünschten Zahnersatz herstellen zu können.

Ganz allgemein kann mit einem Messstrahl gemessen werden, der zu dem Auftreffstrahl in Gegenrichtung reflektiert wird, also Auftreffstrahl und Messstrahl einen von 0° abweichenden Winkel einschließen können. Bevorzugterweise wird der Messstrahl in den Auftreffstrahl hinein zurückreflektiert, wie dies typischerweise bei Laserabstandsmessungen oder bei conoskopischen Messungen der Fall ist. Es besteht selbstverständlich auch die Möglichkeit, dass nach dem Triangulationsverfahren eine z-Koordinatenmessung erfolgt. Bevorzugterweise wird jedoch mit Hilfe eines Laserstrahls eine Laserabstandsmessung durchgeführt, um die z-Koordinate zu bestimmen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsformen.

Es zeigen:
- Fig. 1: eine Prinzipdarstellung eines Messgerätes,
- Fig. 2: ein Übersichtsbild eines zu messenden Objektes,
- Fig. 3: Scanbereiche des Objektes gemäß Fig. 2,
- Fig. 4a - 4h: Darstellungen zur Verdeutlichung des Messprinzips,
- Fig. 5: eine Prinzipdarstellung zur Verdeutlichung der Messdatenbewertung und
- Fig. 6a - 6e: weitere Prinzipdarstellungen zur Verdeutlichung der Messdatenbewertung.

Die erfindungsgemäße Lehre soll anhand der Formerfassung eines zahntechnischen Modells erläutert werden, ohne dass hierdurch eine Einschränkung der erfindungsgemäßen Lehre erfolgt. Das zahntechnische Modell - sei es ein positives Modell, sei es ein Abdruck (negatives Modell) - wird nach der nachfolgend beschriebenen Lehre gescant, um sodann aus den gewonnenen und digitalisierten Daten eine gewünschte zahntechnische Restauration mittels CAD/CAM-Software herzustellen. Dabei kann ein Verfahren zur Herstellung des Zahnersatzes zur Anwendung gelangen, wie dieses aus der WO-A-99/47065 bekannt ist, auf deren Offenbarung ausdrücklich Bezug genommen wird.

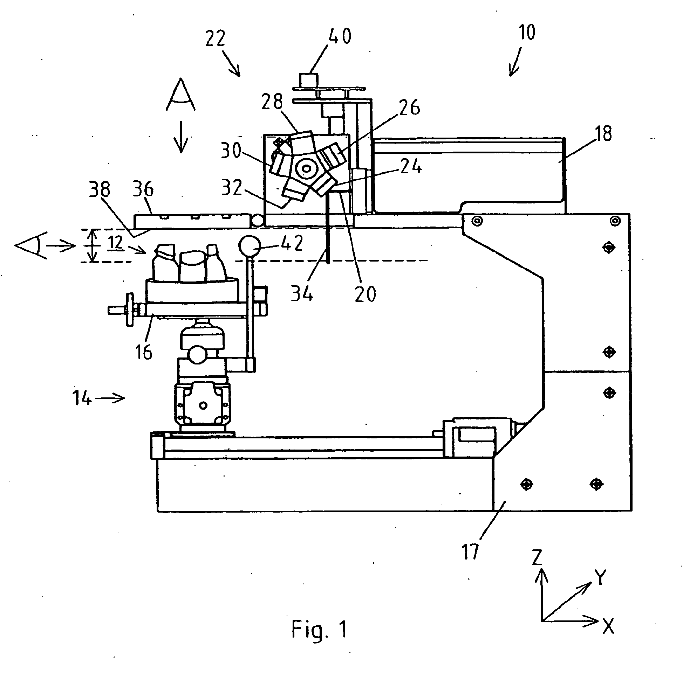

In Fig. 1 ist rein prinzipiell ein Messgerät 10 dargestellt, mit der ein zahntechnisches Modell 12 scannend gemessen werden soll.

Das Gerät 10 umfasst einen in x- und y-Richtung verfahrbaren Messtisch 14, auf dem z. B. von einem Modellhalter 16 das zahntechnische Modell 12 aufgenommen ist. Der Messtisch 14 ist entlang der in x- und y-Richtung verlaufenden Führungsbahnen verstellbar, die von einem Rahmen 17 des Gerätes 10 ausgehen. Oberhalb des Messtisches 16 und vorzugsweise mit dem Rahmen 17 verbunden ist eine optische Sensoreinrichtung angeordnet, die im Ausführungsbeispiel als Laserabstandssensor 18 ausgebildet ist.

Mit dem Abstandssensor 18 soll in nachstehend beschriebener Weise die z-Koordinate von Bereichen des Modells 12 bestimmt werden, also eine Formerfassung durch Bestimmung der Raumkoordinaten x, y, z. Die x- und y-Koordinate des Messpunktes wird durch die Position des Messtisches 14 vorgegeben.

Der Laserabstandssensor 18 weist eine nicht dargestellte Laserlichtquelle auf. In dem optischen Weg der emittierten Strahlung 20 ist eine revolverartig ausgebildete Spiegelanordnung 22 angeordnet, die im Ausführungsbeispiel fünf Spiegel 24, 26, 28, 30, 32 umfasst. Die Spiegel 24, 26, 28, 30, 32 weisen zu der optischen Achse der Lichtquelle, also zu dem emittierten Strahl 20, unterschiedliche Neigungswinkel in Bezug auf die x- und y-Ebene auf. Der von dem jeweiligen Spiegel - im Ausführungsbeispiel von dem Spiegel 24 - reflektierte Strahl 34 trifft sodann auf das Modell 12 in einer festgelegten x-/y-Position auf. Der von dem Modell 12 in den abgelenkten Strahl 34 zurückreflektierte Strahl, der der eigentliche Messstrahl ist, wird sodann von dem Laserabstandsmesser 18 gemessen, um so die z-Position des Auftreffpunkts des abgelenkten Strahls 34 bestimmen zu können. Insoweit wird jedoch auf hinlänglich bekannte Messverfahren und Auswertemöglichkeiten verwiesen, die aus der Koordinatenmesstechnik bekannt sind.

Die Reflexionsfläche der Spiegel 24, 26, 28, 30, 32 ist derart ausgelegt, dass der umgelenkte Strahl 34 auch Hinterschnitte des zu messenden Modells 12 erfasst. Somit trifft der umgelenkte Strahl 34 in Abhängigkeit von dem jeweiligen zum Einsatz gelangenden Spiegel 24, 26, 28, 30, 32 bzw. dessen Ausrichtung zur von dem Laserabstandssensor emittierten Strahlung 20 zu der x-/y-Ebene unter einem gewünschten Winkel α auf, so dass infolgedessen auch Unterschnitte bzw. Hinterschneidungen des Modells 12 problemlos gemessen werden können, ohne dass ein Kippen des Modells 12 erforderlich ist. Vielmehr wird dieses ausschließlich in der x-/y-Ebene des Messgerätes 10 zum Einstellen des jeweiligen Messpunktes verstellt, dessen z-Koordinate mittels des Laserabstandssensors 18 gemessen wird.

Um über den gesamten Tiefenschärfenbereich T des Messsensors 18 Messpunkte des Modells 12 aufzunehmen, wird das Modell 12 vor Beginn der Messung zu einer Schablone 36 ausgerichtet, die eine Bezugsfläche 38 aufweist, die parallel zur x-/y-Ebene verläuft. Dabei wird der Messtisch 16 derart zu der Schablone 36, d. h. der Bezugsfläche 38 ausgerichtet, dass das Modell 12 die Fläche 38 berührt. Bei einem Modell, mit dem ein Käppchen oder eine Krone hergestellt werden soll, wird das Modell 12 die Fläche 38 in einem Punkt berühren. Bei der Herstellung von Brücken werden die dem Modell zu entnehmenden Brückenpfeiler jeweils die Fläche 38 berühren. Durch diese Vorjustage ist erkennbar sichergestellt, dass der z-Messbereich des Laserabstandssensors 18 voll ausgenutzt werden kann.

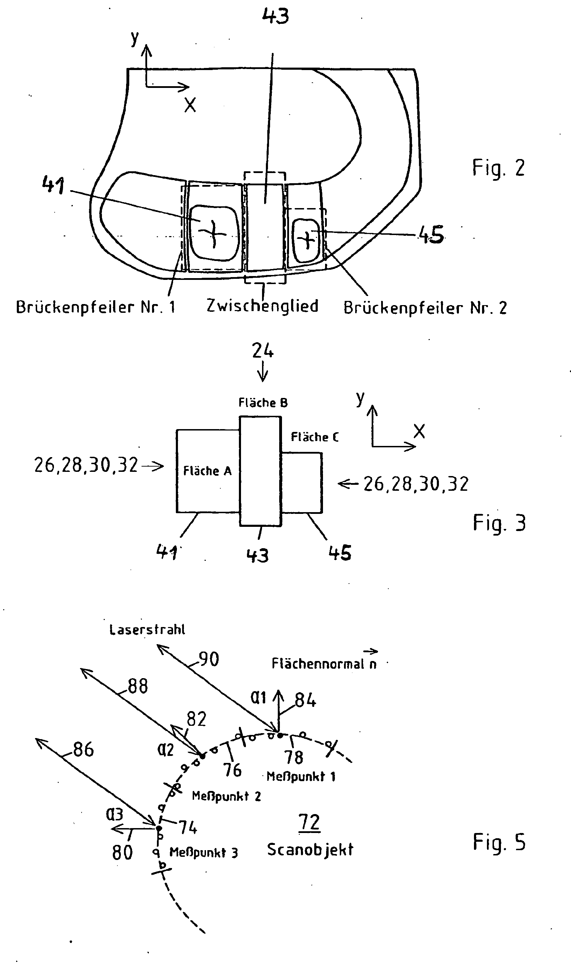

Sodann wird vorzugsweise mittels eines weiteren optischen Sensors 40 wie CCD-Kamera ein Übersichtsbild des justierten Modells 12 aufgenommen. Das Übersichtsbild wird auf einem Monitor dargestellt, um sodann durch den Anwender Scanbereiche festzulegen bzw. zu definieren. Dies soll anhand der Fig. 2 prinzipiell verdeutlicht werden. So werden bei einem für die Herstellung einer Brücke bestimmten Modell Bereiche 41, 43, 45 des Übersichtsbilds mittels eines Eingabegerätes festgelegt. Dies kann bei MS WORD per Maus durch Öffnen eines Rechtecks und über "Drag" und "Zoom" zur Festlegung des Messbereichs 41, 43, 45 erfolgen. Sodann wird zum jeweiligen Messbereich 41, 43, 45 ein Restaurationstyp bzw. eine geometrische Struktur entsprechend der Dentalfachnomenklatur mittels eines Eingabegerätes bestimmt. Im Ausführungsbeispiel wird der Messbereich 41 als Restaurationstyp Brückenpfeiler Nr. 1, der Messbereich 43 als Zwischenglied und der Messbereich 45 als Restaurationstyp Brückenpfeiler Nr. 2 festgelegt. Sodann wird unter Zugrundelegung des Messbereichs und des festgelegten Restaurationstyps bzw. der geometrischen Struktur die Scanstrategie entsprechend abgelegter Daten in einem Rechner festgelegt. Scanstrategie bedeutet dabei, dass für jeden Scanbereich 41, 43, 45 die Verfahrwege des Messtisches 14 in x- und y-Richtung und die Messpunktdichte festgelegt wird. Des Weiteren erfolgt eine Unterteilung des jeweiligen Gesamtmessbereichs 41, 43, 45 in diskrete Bereiche, die jeweils mit unterschiedlichen Auftreffwinkeln, also unterschiedlicher Umlenkung der emittierten Strahlung 20 durch Einstellen verschiedener Spiegel 24, 26, 28, 30, 32 festgelegt werden. Selbstverständlich besteht die Möglichkeit, von einer Unterteilung des jeweiligen Messbereichs 41, 43, 45 abzusehen und den jeweiligen Messbereich 41, 43, 45 jeweils vollständig mit unterschiedlich umgelenkten Auftreffstrahlen zu beaufschlagen.

Die in Fig. 3 noch einmal prinzipiell dargestellten Messbereiche 41, 43, 45 gemäß Fig. 2 werden mit Licht beaufschlagt, die mittels verschiedener Spiegelstellungen umgelenkt werden.

So wird im Ausführungsbeispiel der Messbereich 41 und damit die Fläche A nacheinander unter Berücksichtigung der jeweiligen x-/y-Position unter Verwendung nachstehender Spiegel mit Strahlung beaufschlagt:
Spiegel 26 für einen schrägen Lichteinfall in Richtung x-Achse,
Spiegel 28 für einen schrägen Lichteinfall in Richtung -x-Achse,
Spiegel 30 für einen schrägen Lichteinfall in Richtung y-Achse,
Spiegel 32 für einen schrägen Lichteinfall in Richtung -y-Achse.

Entsprechend wird der Messbereich 45 und damit die Fläche C gemessen. Die Fläche B (Messbereich 43) wird ausschließlich mittels durch den Spiegel 24 umgelenkter Strahlung gemessen, die senkrecht zur x-/y-Ebene verläuft, also dem Strahl 34 entspricht.

Die Messpunktdichte des jeweiligen Messbereichs 41, 43, 45 wird gleichfalls von der Scanstrategie festgelegt und durch die gewünschte Messgenauigkeit bestimmt.

Um bei der Teilformerfassung die durch die Spiegel bedingte optische Verzerrung zu korrigieren, wird zuvor der Laserabstandssensor 18 kalibriert. Hierzu ist ein Kalibrierelement, im Ausführungsbeispiel der Fig. 1 eine Kalibrierkugel 42 vorgesehen, die für jede Spiegelstellung gemessen wird. Hierdurch ist eine Transformation der tatsächlichen x-y-z-Koordinaten des gemessenen Punktes zu der realen Position im x-y-z-Koordinatensystem möglich, die bei den Messungen des Modells 12 einfließt.

Um nur die Messpunkte, also x-, y- und z-Koordinaten zu berücksichtigen, die hinreichend genau die Form des Modells 12 repräsentieren, erfolgt eine Identifikation und Filterung der Messdaten wie folgt.

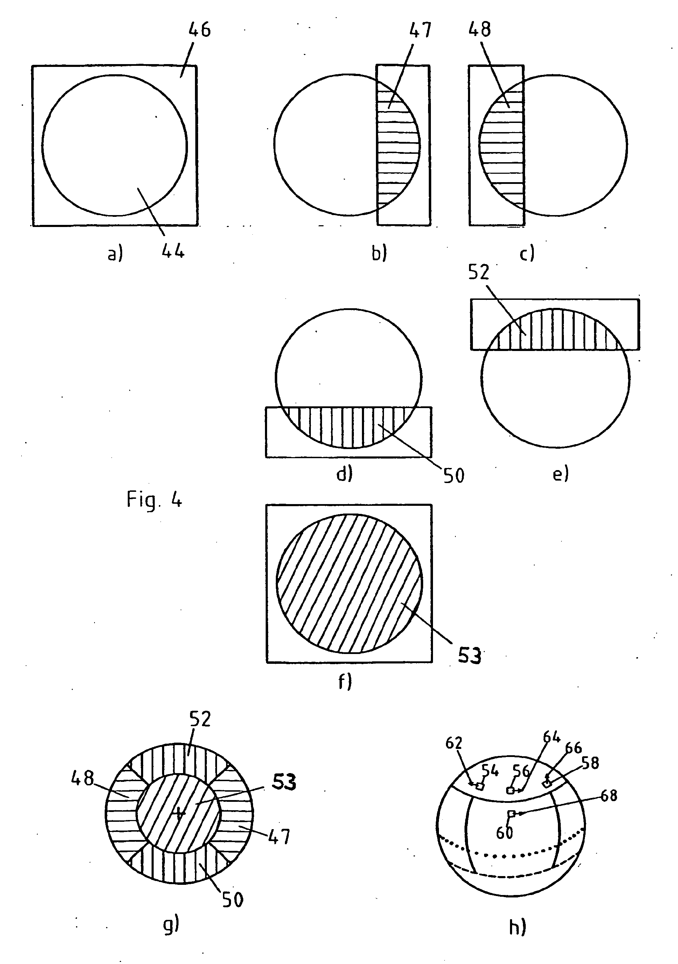

Die Selektion und Filterung der Messdaten soll anhand der Fig. 4 und 5 prinzipiell erläutert werden. In den Fig. 4a) bis 4f) wird zunächst veranschaulicht, welche Teilbereiche eines Objekts 44 mit welchen Spiegeln 24, 26, 28, 30, 32 gemessen werden sollen. Im Ausführungsbeispiel handelt es sich bei dem Objekt 44 um eine Kugel. Entsprechend zuvor erfolgter Erläuterungen wurde dabei zunächst der dem Objekt 44 zuzuordnende Scanbereich 46 festgelegt. Sodann wird gemäß Fig. 4b) ein Teilbereich des Scanbereichs 46 und somit ein Abschnitt 47 (schraffierter Bereich) der Oberfläche der Kugel 44 gemessen, und zwar im Ausführungsbeispiel mit dem Spiegel 26, der mit schrägem Lichteinfall in Richtung x-Achse misst. Sodann wird der den Abschnitt enthaltende Teilbereich 48 mit dem Spiegel 28 mit schrägem Lichteinfall in Richtung -x-Achse gemessen. Anschließend erfolgt ein Messen des Abschnitts 50 mit dem Spiegel 30 mit schrägem Lichteinfall in Richtung y-Achse. Der der Fig. 4e) zu entnehmende Abschnitt 52 wird mit dem Spiegel 32 mit schrägem Lichteinfall in Richtung - y-Achse gemessen. Schließlich erfolgt gemäß Fig. 4f) ein Messen mit dem Spiegel 24 senkrecht zur x-/y-Ebene (schraffierter Bereich 53).

Die Messdaten der Abschnitte 47, 48, 50, 52, 53 werden sodann verknüpft, wie dies durch die Fig. 4g) prinzipiell verdeutlicht wird, um sodann aus den Messwerten bzw. -daten die Form des Objektes 44 zu ermitteln, was in der Fig. 4h) in 3D-Ansicht wiedergegeben ist.

Um nur die Messwerte zu berücksichtigen, die hinreichend genau sind, erfolgt in nachstehender Weise eine Selektierung und damit ein Filtern.

So wird der jeweilige Bereich des gemessenen Objekts 44 in diskrete Bereiche bzw. Flächen unterteilt, von denen rein beispielhaft einige in der Fig. 4h) eingezeichnet und mit dem Bezugszeichen 54, 56, 58, 60 gekennzeichnet sind. Von jedem diskreten Teilbereich 54, 56, 58, 60 wird aufgrund der Messwerte eine Normale 62, 64, 66, 68 berechnet. Sodann werden nur diejenigen Messwerte des jeweiligen diskreten Messbereichs 54, 56, 58, 60 zur Bestimmung der Form des Objekts 44 berücksichtigt, denen Messstrahlen zuzuordnen sind, die zu der jeweiligen Normalen 62, 64, 66, 68 einen Winkel einschließen, der kleiner als ein vorgegebner Grenzwinkel α_{GR} ist. Dies wird prinzipiell aus der Fig. 5 ersichtlich. So wird ein Messbereich eines zu messenden Objekts 72 in diskrete Teilbereiche 74, 76, 78 unterteilt. Jedem diskreten Teilbereich 74, 76, 78 wird eine mittlere Normale 80, 82, 84 zugeordnet, die erwähntermaßen aus den Messdaten der jeweiligen Teilbereiche 74, 76, 78 berechnet wird. Sodann wird für jeden Messpunkt des diskreten Messbereichs 74, 76, 78, dem die Normale 80, 82, 84 zugeordnet ist, der zugehörige Messstrahl 86, 88, 90 dahingehend bewertet, ob der zu der Normalen 80, 82, 84 eingeschlossene Winkel α1, α2, α3 gleich oder kleiner bzw. größer als ein vorgegebener Grenzwinkel α_{GR} ist. Die Messstrahlen und damit die Messpunkte, bei denen der Winkel α größer als der vorgegebene Grenzwinkel α_{GR} ist, werden missachtet, wohingegen die Messpunkte der Messstrahlen, die einen Winkel α ≤ α_{GR} zu der jeweiligen Normalen einschließen, bei der Berechnung des Objekts 72, also bei der Formerfassung ausgewertet werden. Vorzugsweise ist 30° > α_{GR}, insbesondere 10° > α_{GR}.

In Fig. 5 sind die Messpunkte, auf deren Basis die Normalen 80, 82, 84 berechnet werden, durch einen offenen Kreis dargestellt, wohingegen die in zuvor beschriebener Weise klassifizierten Messpunkte durch einen geschlossenen Kreis gekennzeichnet sind. Ferner ist aus der Darstellung der Fig. 5 ersichtlich, dass Auftreffstrahl und Messstrahl ineinander fallen.

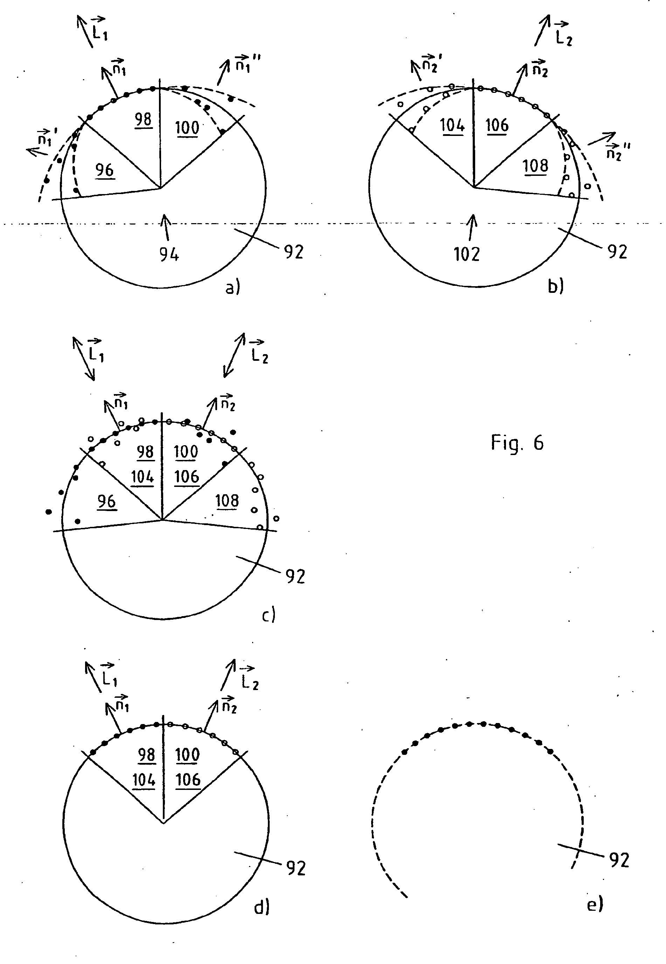

Das erfindungsgemäße Verfahren zum Selektieren und Filtrieren von Messwerten soll auch anhand der Fig. 6 verdeutlicht werden. In Fig. 6 sind Messpunkte dargestellt, die mittels Messstrahlen L 1 bzw. L2 ermittelt werden, die in Abhängigkeit von der Abweichung zu der jeweiligen einem Bereich zugeordneten Normalen n1 bzw. n2 unterschiedlich genau die Form des zu messenden Körpers 92 repräsentieren, der im Ausführungsbeispiel eine Kugel ist. So wird mit dem Messstrahl L1 ein Gesamtbereich 94 gemessen, der in Teilbereiche 96, 98 100 unterteilt wird. Jedem Bereich 96, 98, 100 wird eine Normale n1, n1' und n1" zugeordnet, die aus den Messwerten errechnet wird, die in dem jeweiligen Bereich 96, 98, 100 gemessen werden. Sodann wird der Winkel zwischen Messstrahl L 1 und der jeweiligen Normalen n1, n1' und n1" bestimmt. Liegt der Winkel außerhalb des Grenzwinkels α_{GR}, so werden die entsprechenden Messdaten ausgefiltert und somit zur Berechnung der Form des Körpers nicht berücksichtigt. Im Ausführungsbeispiel der Fig. 6a werden ausschließlich die Messdaten des Bereichs 98 verarbeitet.

In der Darstellung der Fig. 6b) wird zur Messung des Formkörpers 92 ein Messstrahl L2 benutzt, der von dem Messstrahl L1 in der Richtung abweicht. Entsprechend der Erläuterung gemäß Fig. 6a) wird der gesamte gemessene Bereich 102 in diskrete Bereiche 104, 106, 108 unterteilt und jedem Bereich eine Normale n2, n2' und n2" aus den gewonnenen Messdaten zugeordnet. Sodann erfolgt die Bestimmung der Winkeldifferenz zwischen dem Messstrahl L2 und der jeweiligen Normalen n2, n2' und n2". Im Ausführungsbeispiel der Fig. 6b) werden sodann ausschließlich die Messdaten des Bereichs 106 berücksichtigt.

Die Messungen der Bereiche 96, 98, 100, 104, 106, 108 ergeben insgesamt eine Messdatenwolke, die der Fig. 6c) zu entnehmen ist. Dabei stimmen die Teilbereiche 98 und 104 sowie 100 und 106 überein. Man erkennt, dass von den gesamten Messdaten unter Berücksichtigung des zuvor genannten Auswahlkriteriums bezüglich des Grenzwinkels zwischen Teil-bereichsnormalen und Messstrahl entsprechend der Fig. 6d) allein die Messdaten als hinreichend genau bewertet werden, die in den Bereich 98 bzw. 104 mit dem Messstrahl L1 und in dem Bereich 100 bzw. 106 mit dem Messstrahl L2 gemessen worden sind, da der Messstrahl zu der dem Bereich 98, 104 bzw. 100, 106 zugeordnete Normalen n1 bzw. n2 einen Winkel einschließt, der kleiner als der Grenzwinkel ist. Aus den Messdaten wird sodann die Form des Körpers 92 errechnet. Man erkennt entsprechend der Fig. 6e), dass die verarbeiteten Messdaten den Messkörper 92 hinreichend genau wiedergeben. Die digitalisierten Messdaten werden sodann mit einer geeigneten Software verarbeitet, um anschließend im CAD/CAM-Verfahren einen gewünschten Körper herzustellen.

Anzumerken ist, dass die erfindungsgemäße Lehre zur Formerfassung insbesondere mittels einer einzigen optischen Sensoreinrichtung durchgeführt werden kann, wenn man von dem Sensor für das Übersichtsbild absieht. Selbstverständlich wird die erfindungsgemäße Lehre auch dann nicht verlassen, wenn mehr als eine Sensoreinrichtung zur Messung der Z-Koordinate benutzt wird.

## Patentansprüche

1. Verfahren zur dreidimensionalen Formerfassung eines Körpers (12, 72) oder eines Teils von diesem, insbesondere eines zahntechnischen Objekts wie Modells, durch scannende berührungslose Abstandsmessung unter Verwendung einer eine Ausgangsstrahlung emittierende Strahlenquelle umfassenden optischen Sensoreinrichtung (18), wobei unter verschiedenen Winkeln die Form des Körpers wiedergebende Bereiche (41, 43, 45, 74, 76, 78) mit als Auftreffstrahlung bezeichneter Strahlung (34) beaufschlagt und als Messstrahlung bezeichneter reflektierter Strahlung gemessen werden, wobei der Körper relativ zu der optischen Sensoreinrichtung verstellt wird,
wobei
die Ausgangsstrahlung (20) mittels zumindest eines Umlenkelementes (24, 26, 28, 30, 32) derart umgelenkt wird, dass die Auftreffstrahlung (34) den Körper (12, 72) unter verschiedenen Winkeln zur Ausgangsstrahlung beaufschlag,
in eine Gegenrichtung der Auftreffstrahlung reflektierte Strahlung (86, 88, 90) zur Abstandsbestimmung mit der optischen Sensoreinrichtung gemessen wird und
zur Formerfassung des jeweiligen gemessenen Bereichs (41, 43, 45, 74, 76, 78) die von diesem reflektierte, als Messstrahlung bezeichnete Strahlung berücksichtigt wird, die zu einer Oberflächennormalen (80, 82, 84), die dem jeweiligen Bereich entspricht oder zugeordnet wird und die aus aus der Messstrahlung gewonnenen ungefilterten Messdaten des Bereichs ermittelt wird, einen Winkel α einschließt, der zu der Oberflächennormalen gleich einem oder kleiner als ein vorgegebener Grenzwinkel α_{GR} ist, wobei reflektierte Strahlung zur Formerfassung unberücksichtigt bleibt, deren Winkel zu der Oberflächennormalen größer als der vorgegebene Grenzwinkel α_{GR} ist.

2. Verfahren nach Anspruch 1,
wobei als das zumindest eine Umlenkelement (24, 26, 28, 30, 32) ein Spiegel oder ein Prisma verwendet wird.

3. Verfahren nach Anspruch 1 oder 2,
wobei der Körper (44) bzw. dessen zu messende Oberfläche in die Bereiche (47, 48, 50, 52, 53) bildende diskrete Flächen unterteilt wird und unter Zugrundelegung der von der jeweiligen diskreten Fläche reflektierten Messstrahlung errechneten Raumkoordinaten der diskreten Fläche deren Normale (62, 64, 66, 68) bzw. mittlere Normale berechnet wird.

4. Verfahren nach zumindest Anspruch 1,
wobei das Objekt (12) vor dem scannenden Messen zu einer Schablone (36) ausgerichtet wird, die eine Fläche (38) aufspannt, die quer, vorzugsweise senkrecht zu von der optischen Sensoreinrichtung (18) emittierten Ausgangstrahlung (20) und von dem jeweiligen Umlenkelement (24, 26, 28, 30, 32) umgelenkten Auftreffstrahlung (34) aufgespannten Ebenen verläuft, wobei vorzugsweise die Schablone (36) derart ausgerichtet wird, dass die Fläche (38) parallel zu der von der Sensoreinrichtung (18) emittierten unumgelenkten Strahlung (20) verläuft.

5. Verfahren nach zumindest einem der vorhergehenden Ansprüche,
wobei der Körper (12) vor dem scannenden Messen mit einer oder der optischen Sensoreinrichtung (40) zur Gewinnung eines Übersichtsbilds erfasst wird und sodann unter Zugrundelegung des Übersichtsbilds Scanbereiche (41, 43, 45) festgelegt werden.

6. Verfahren nach zumindest Ansprüchen 4 und 5,
wobei von dem zu der Schablone (36) ausgerichteten Körper (12) ein zweidimensionales Übersichtsbild auf einem Monitor eines Rechners dargestellt wird und das Übersichtsbild sodann auf dem Monitor in die Scanbereiche (41, 43, 45) unterteilt wird.

7. Verfahren nach zumindest Anspruch 5,
wobei dem jeweiligen Scanbereich (41, 43, 45) eine geometrische Struktur zugeordnet wird und unter Berücksichtigung der Scanbereiche Verfahrwege des Körpers in x-/y-Richtung eines Koordinatensystems und/oder Umlenkwinkel der emittierten Strahlung (20) als Scanstrategie festgelegt werden, wobei insbesondere die jeweilige Scanstrategie aus mehreren in einem Rechner vorher abgelegten Scanstrategien vorzugsweise automatisch ausgewählt wird.

8. Verfahren nach zumindest Ansprüchen 4 oder 6 und 7,
wobei der Körper (12) in z-Richtung derart zu der Schablone (36) ausgerichtet wird, dass der Körper die Fläche (38) in zumindest einem Punkt, vorzugsweise in zumindest zwei zueinander beabstandeten Bereichen berührt.

9. Verfahren nach zumindest einem der vorhergehenden Ansprüche,
wobei eine im Querschnitt punkt-, kreis-, linien- oder flächenförmige Auftreffstrahlung verwendet wird und dass insbesondere als Messstrahl der zu dem Auftreffstrahl in Gegenrichtung reflektierte Strahl gemessen wird oder vorzugsweise der in den Auftreffstrahl hinein zurückreflektierte Strahl gemessen wird oder der Messstrahl zu dem Auftreffstrahl im Auftreffpunkt des zu messenden Körpers einen Winkel β mit β ≠ 0° einschließt.

## Claims

1. A method for three-dimensional shape measurement of a body (12, 72) or of a part thereof, in particular of a dental object such as a model, by scanning non-contact distance measurement using an optical sensor device (18) comprising a radiation source emitting an original radiation, whereby areas (41, 43, 45, 74, 76, 78) reproducing the shape of the body at various angles are subjected to a radiation (34) referred to as impact radiation and are measured with reflected radiation referred to as measuring radiation, with the body being adjusted relative to the optical sensor device, whereby the body is adjusted relative to the optical sensor device,
**whereby**
the original radiation (20) is deflected such by means of at least one deflecting element (24, 26, 28, 30, 32) that the impact radiation (34) acts upon the body (12, 72) at different angles relative to the original radiation,
radiation (86, 88, 90) reflected in an opposite direction of the impact radiation is measured with the optical sensor device for distance analysis, and
for shape measurement of the respectively measured area (41, 43, 45, 74, 76, 78) the radiation reflected therefrom and referred to as measuring radiation is considered which describes an angle α relative to a surface normal (80, 82, 84) that corresponds or is assigned to the respective area and which is ascertained from the unfiltered measuring data gained from the measuring radiation, said angle being equal to or smaller than a predefined critical angle α_{GR} relative to the surface normal, whereby unconsidered for the shape measurement remains reflected radiation the angle of which relative to the surface normal is greater than the predefined critical angle α_{GR}.

2. Method according to claim 1,
**whereby**
as the at least one deflection element (24, 26, 28, 30, 32) a mirror or prism is used.

3. Method according to claim 1 or 2,
**whereby**
the body (44) or its surface to be measured is subdivided into discrete surfaces forming the areas (47, 48, 50, 52, 53), and whereby on the basis of the space coordinates of the discrete area calculated from the measuring radiation reflected from the respective discrete area the normal (62, 64, 66, 68) or mean normal thereof is calculated.

4. Method according to at least claim 1,
**whereby**
prior to the scanning measurement, the object (12) is aligned relative to a template (36) defining a surface (38) which runs transversely, preferably vertically, to original radiation (20) emitted by the optical sensor device (18) and to the plane defined by the impact radiation (34) deflected by the respective deflection element (24, 26, 28, 30, 32), whereby the template (36) is preferably aligned such, that the surface (38) runs parallel to the non-deflected radiation (20) emitted by the sensor device (18).

5. Method according to at least one of the preceding claims,
**whereby**
prior to the scanning measurement, the body (12) is recorded with a or the optical sensor device (40) to obtain an overview image, and scan areas (41, 43, 45) are then defined on the basis of the overview image.

6. Method according to at least claims 4 and 5,
**whereby**
a two-dimensional overview image of the body (12) aligned relative to the template (36) is displayed on a monitor of a computer and the overview image is then subdivided on the monitor into the scan areas (41, 43, 45).

7. Method according to at least claim 5,
**whereby**
a geometrical structure is assigned to the respective scan area (41, 43, 45) and under consideration of the scan areas traverse paths of the body in x/y direction of a coordinate system and/or deflection angles of the emitted radiation (20) are defined as scan strategy, whereby in particular the respective scan strategy is selected preferably automatically from several scan strategies previously filed in a computer.

8. Method according to at least claims 4 or 6 and 7,
**whereby**
the body (12) is aligned in the z direction relative to the template (36) such that the body contacts the surface (38) in at least one point, preferably in at least two areas at a distance from one another.

9. Method according to at least one of the preceding claims,
**whereby**
an impact radiation with dot-, circle-, linear- or face-shaped cross-section is used, and that in particular as measuring beam the beam is measured which is reflected in opposite direction to the impact beam, or preferably the beam is measured which is reflected back into the impact beam, or the measuring beam describes an angle β with β ≠ to 0° relative to the impact beam in the impact point of the body to be measured.

## Revendications

1. Procédé de saisie tridimensionnelle de la forme d'un objet (11, 12) ou d'une partie de celui-ci, en particulier d'un objet de technique dentaire tel qu'un modèle, en mesurant sans contact et par scannographie la distance à l'aide d'un dispositif de détection optique comprenant une source de rayonnement émettant un rayonnement de sortie, sachant que des sections (41, 43, 45, 74, 76, 78) reproduisant la forme de l'objet sous différents angles sont soumises à un rayonnement (34) appelé rayonnement incident et mesurées à l'aide d'un rayonnement réfléchi appelé rayonnement de mesure, et que l'objet est déplacé relativement au dispositif de détection optique, sachant
que le rayonnement de sortie (20) est dévié à l'aide d'au moins un élément de déviation (24, 26, 28, 30, 32) de façon à ce que le rayonnement incident (34) atteigne l'objet (12, 72) sous différents angles par rapport au rayonnement de sortie,
qu'un rayonnement (86, 88, 90) réfléchi dans le sens inverse au rayonnement incident est mesuré avec le dispositif de détection optique pour déterminer la distance
et que, pour détecter la forme de la section (41, 43, 45, 74, 76, 78) mesurée, est pris en compte le rayonnement réfléchi par cette même section, appelé rayonnement de mesure, qui inclut, par rapport à une normale de surface (80, 82, 84) correspondant ou étant attribuée à la section respective et étant déterminée à partir de données de mesure non filtrées de la section obtenues grâce au rayonnement de mesure, un angle α qui, par rapport à la normale de surface, est identique ou inférieur à un angle limite α_{GR} prédéfini, sachant que, pour la saisie de la forme, n'est pas pris en compte le rayonnement réfléchi dont l'angle par rapport à la normale de surface est supérieur à l'angle limite α_{GR} prédéfini.

2. Procédé selon la revendication 1,
sachant que l'au moins un élément de déviation (24, 26, 28, 30, 32) est un miroir ou un prisme.

3. Procédé selon la revendication 1 ou 2,
sachant que l'objet (44) ou sa surface à mesurer est divisé(e) en surfaces discrètes formant les sections (47, 48, 50, 52, 53), et que, sur la base des coordonnées spatiales de la surface discrète calculées à partir du rayonnement de mesure réfléchi par la surface discrète respective, est calculée sa normale (62, 64, 66, 68) ou normale moyenne.

4. Procédé selon au moins la revendication 1,
sachant que l'objet (12) est, avant la mesure par scannographie, aligné sur un modèle (36) qui définit une surface (38) qui s'étend transversalement, de préférence verticalement à aux plans définis par le rayonnement de sortie (20) émis par le dispositif de détection optique (28) et le rayonnement incident (34) dévié par l'élément de déviation (24, 26, 28, 30, 32), sachant que le modèle (36) est de préférence orienté de telle façon que la surface (38) s'étend parallèlement au rayonnement (20) non dévié émis par le dispositif de détection (18).

5. Procédé selon au moins l'une des revendications précédentes,
sachant que l'objet (12) est saisi avant la mesure par scannographie à l'aide d'un ou du dispositif de détection optique (40) afin d'obtenir une image d'ensemble sur la base de laquelle des sections à scanner (41, 43, 45) sont ensuite déterminées.

6. Procédé selon au moins l'une des revendications 4 et 5,
sachant qu'une image d'ensemble en deux dimensions de l'objet (12) aligné sur le modèle (36) est représentée sur l'écran d'un ordinateur et ensuite divisée en plusieurs sections à scanner (41, 43, 45) sur ce même écran.

7. Procédé selon au moins la revendication 5,
sachant qu'une structure géométrique est attribuée à chacune des sections à scanner (41, 43, 45) et que, en considération des sections à scanner, des déplacements de l'objet dans le sens x/y d'un système de coordonnées et/ou dans angles de déviation du rayonnement émis (20) sont déterminés en tant que stratégie de balayage, sachant en particulier que la stratégie respective de balayage est de préférence choisies automatiquement parmi plusieurs stratégies de balayage enregistrées au préalable dans un ordinateur.

8. Procédé selon au moins les revendications 4 ou 6 et 7,
sachant que l'objet (12) est, dans le sens z, aligné de telle manière sur le modèle (36) que l'objet touche la surface (38) en au moins un point, de préférence dans au moins deux zones éloignées l'une de l'autre.

9. Procédé selon au moins l'une des revendications précédentes,
sachant qu'est utilisé un rayonnement incident présentant en coupe la forme d'un point, d'un cercle, d'une ligne ou d'une surface, et qu'est mesuré, en particulier en tant que rayonnement de mesure, le rayonnement réfléchi dans le sens opposé au rayonnement incident ou de préférence le rayonnement réfléchi dans le rayonnement incident ou que le rayonnement de mesure décrit un angle β où β ≠ 0° par rapport au rayonnement incident dans le point d'incidence de l'objet à mesurer.
